# EUROPÄISCHE PATENTSCHRIFT

(11) **EP 1 076 437 B1**
(45) Veröffentlichungstag und Bekanntmachung des Hinweises auf die Patenterteilung: **16.04.2008**
(21) Anmeldenummer: 00116747.7
(22) Anmeldetag: 03.08.2000
(51) Int. Cl.: H04L 12/24

(54) **Editierverfahren für Konfigurationsdaten eines Telekommunikationssystems sowie Computerprodukt und Server dafür**
Method, computerproduct and server for editing configuration - data of a telecommunications system
Méthode, produit informatique et serveur pour éditer des données de configuration d'un système de télécommunications

(30) Priorität: 11.08.1999 DE 19937976
(43) Veröffentlichungstag der Anmeldung: 14.02.2001
(73) Patentinhaber: Alcatel Lucent, 75008 Paris (FR)
(72) Erfinder: Meyer, Heinz-Holger, 70499 Stuttgart (DE); Hess, Hans, 74372 Sersheim (DE)
(74) Vertreter: Schmidt, Werner Karl

(56) Entgegenhaltungen:
- WO-A-98/04067
- GB-A- 2 206 713
- US-A- 5 717 950

## Beschreibung

Die Erfindung betrifft ein Verfahren zum Editieren von Konfigurationsdaten eines Telekommunikationssystems sowie Computerprodukt und Server zum Durchführen dieses Verfahrens.

Konfigurationsdaten von Telekommunikationssystemen, z.B. die Konfigurationsdaten eines Knoten des Telekommunikationssystems, sind meist als voneinander unabhängige Daten über mehrere Tabellen verstreut. Daher kann ein Konfigurationsparameter in unterschiedlichen Tabellen auftreten und unterschiedlich benannt sein. Bei Bearbeitung (Editieren/Validieren) der Tabellen müssen gleiche Parameter in allen Tabellen, in denen sie auftreten, geändert werden.

Bei Datenbanken ist es bekannt, logische Relationen zwischen den Spalten verschiedener Tabellen zu erzeugen. Allerdings muss der Benutzer dann über spezielle Datenbankkenntnisse verfügen. Sofern der Benutzer Telekommunikationssysteme verschiedener Hersteller benutzt, ist allerdings für jedes Telekommunikationssystem speziell geschultes Personal erforderlich. Zudem enthalten Datenbanken Querverweise, die von den bekannten Telekommunikationssystemen nicht verarbeitet bzw. erfasst werden können. Denn bekannte Telekommunikationssysteme akzeptieren nur Konfigurationsdatentabellen im ASCII-Format ohne jegliche Verknüpfungen.

Aus der GB 2 206 713 A ist ein System zum Konfigurieren eines Kommunikationsnetzwerks bekannt. Das System umfasst eine Anforderungen-Datenbank, ein Expertensystem mit einer Arbeitsdatenbank und eine Konfigurationsdatenbank und ist weiterhin mit einem Eingabe-Interface für einen Benutzer verbunden. So genannte Konfigurations-Karten können aus dem Netzwerk herausgelesen und in das Netzwerk eingebracht werden. Die eigentliche Konfiguration des Netzwerks wird mittels des Expertensystems vorgenommen. Während einer Validation können die Einträge von Datenbanktabellen der Anforderungen-Datenbank auf Unstimmigkeiten geprüft werden, wobei die Prüfung mittel.s so genannter lokaler Ziel für einzelne Datenbanktabellen der Anforderungen-Datenbank erfolgt. Dabei erhält der Benutzer die Möglichkeit, Fehlerkorrekturen durchzuführen, welche in der Arbeitsdatenbank zwischengespeichert werden.

Weiterhin ist aus der US 5,717,950 ein Informations-Verwaltungs-System über Ein- und Ausgabevorrichtungen eines Mehr-Computer-Systems bekannt. Dieses System verfügt in einer gemeinsamen Datei über eine Konfigurations-Definitions-Tabelle, mit einem Teil betreffend Informationen über die Vorrichtungen an sich und einem Teil betreffend Informationen über die Verbindungen der Vorrichtungen. Die beiden Teilinformationen sind in einer Matrix dargestellt. Zum An- und Abmelden von Ein- und Ausgabevorrichtungen werden ein Vorrichtungs-Identifikationsprozess, ein Benachrichtigungsprozess, ein Zulassungsprozess, ein Vorrichtungs-Informations-Änderungsprozess, ein Vorrichtungs-Verbindungs-Informations-Änderungsprozess und ein Endbenachrichtigungs-Prozess eingesetzt, wobei auch eine Konfigurations-Definitions-Arbeitstabelle als Zwischenspeicher verwendet wird.

Der Erfindung liegt daher die Aufgabe zugrunde, ein einfaches Editierverfahren für Konfigurationsdaten, die über mehrere Tabellen verstreut sind, zu schaffen sowie dafür ein Computerprodukt und einen Server bereitzustellen.

Diese Aufgabe wird erfindungsgemäß gelöst durch ein Verfahren mit folgenden Schritten:
Hinaufladen von zu editierenden Konfigurationsdaten aus einem Telekommunikationssystem, die in mehreren Konfigurationsdatentabellen organisiert sind;
Hinaufladen bzw. Erstellen mindestens einer separaten Kontrolltabelle, in der wechselseitige Abhängigkeiten zwischen Spalten der mehreren Konfigurationsdatentabellen definiert sind;
Editieren einer an die Konfigurationsdaten adressierten Eingabe in allen über die Steuertabelle miteinander verknüpften Spalten der mehreren Konfigurationsdatentabellen; und
Herunterladen der Konfigurationsdaten in das Telekommunikationssystem.

Dabei kann die mindestens eine Kontrolltabelle entweder über einen Editor erstellt oder vom Telekommunikationssystem hinaufgeladen oder automatisch durch das Telekommunikationssystem selbst erstellt werden.

Erfindungsgemäß sind die einzelnen Verknüpfungen zwischen Spalten verschiedener Konfigurationsdatentabellen in einer Kontrolltabelle eingetragen. Für die in verschiedenen Konfigurationsdatentabellen auftretenden gleichen Parameter können jeweils verschiedene Namen vergeben werden, deren Bezug durch die Kontrolltabelle hergestellt ist.

Dieses Editierverfahren bietet einen hohen Komfort bei der Implementierung von Konfigurationsdaten, da in den Konfigurationsdatentabellen Spaltennamen und Spaltenbreite, d.h. der Tabellenkopf, beliebig gewählt und neue Spalten beliebig ergänzt werden können. Dieses kundenfreundliche Editierverfahren kann von Herstellern verschiedener Telekommunikationssysteme genutzt werden, um jeweils ihren Austausch mit den in den Konfigurationsdatentabellen zu editierenden Daten zu konfigurieren. Somit ist das Editierverfahren herstellerunabhängig und daher insbesondere interessant für Kunden, die mit mehreren verschiedenen Telekommunikationssystemen arbeiten.

Bei bevorzugten Verfahrensausgestaltungen wird eine Editierung in einer Spalte automatisch in allen mit ihr über die mindestens eine Kontrolltabelle verknüpften anderen Spalten übernommen. Es ist aber auch möglich, dass der Editor zwischen dem Editieren eines Feldes für den ersten Eintrag zu einem Feld des zweiten Eintrags oder umgekehrt schaltet, indem das erste oder zweite Feld, insbesondere durch Doppelklicken mit der Maus, aktiviert wird.

Vorzugsweise sind die Konfigurationsdätentabellen und/oder die mindestens eine Kontrolltabelle ASCII-Tabellen, die mit jedem Textverarbeitungssystem gelesen und verarbeitet werden können.

Die Erfindung betrifft in einem weiteren Aspekt auch ein Computerprodukt und einen Server zum Durchführen aller Schritte des oben beschriebenen Editierverfahrens.

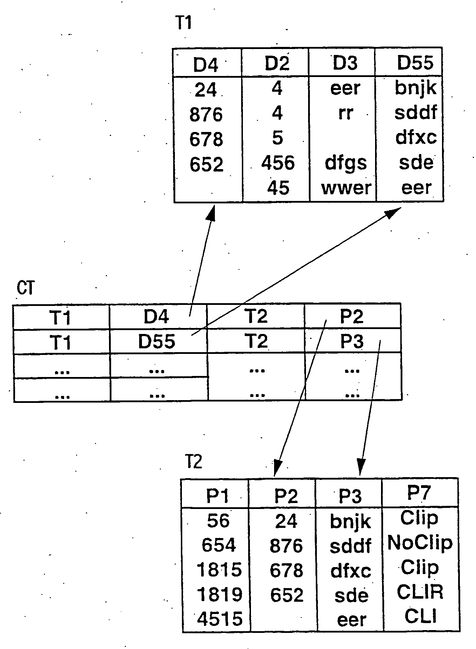

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die einzige Figur zeigt stark schematisch zwei Konfigurationsdatentabellen T1, T2, in denen Konfigurationsdaten eines Telekommunikationssystems, insbesondere eines Knotens, organisiert sind.

Im.Tabellenkopf sind die Spaltennamen, nämlich D4, D2, D3, D55 für die Konfigurationsdatentabelle T1 und P1, P2, P3, P7 für die Konfigurationsdatentabelle T2 sowie die Spaltenbreiten definiert. In beiden Konfigurationsdatentabellen T1, T2 treten gleiche Konfigurationsdaten (Parameter) unter einem jeweils anderen Spaltennamen auf. Zum Beispiel entsprechen die in Konfigurationsdatentabelle T1 unter dem Spaltennamen D4 aufgelisteten Daten den in Konfigurationsdatentabelle T2 unter dem Spaltennamen P2 aufgelisteten Daten.

In einer separaten Kontrolltabelle CT sind diese wechselseitigen Abhängigkeiten (Verknüpfungen) zwischen einzelnen Spalten der beiden Konfigurationsdatentabellen T1, T2 definiert. In der ersten Zeile dieser vierspaltigen Kontrolltabelle CT ist die Spalte D4 der Konfigurationsdatentabelle T1 mit der Spalte P2 der Konfigurationsdatentabelle T2 verknüpft. Eine Änderung in Spalte D4 bedingt eine entsprechende Änderung in Spalte P2.

Um diese Konfigurationsdaten zu bearbeiten, z.B. auszutauschen, lädt ein Editor die Konfigurationsdaten des Telekommunikationssystems. Die Konfigurationsdaten enthalten Operationsparameter für den Austausch und sind über mehrere Konfigurationsdatentabellen T1, T2 verstreut. Einige der Daten sind unabhängig. Der Editor editiert unabhängige Daten in einer Zusammenfassung oder sequentiell mit Hilfe der Kontrolltabelle CT. Wenn z.B. ein erster Eintrag in der Spalte D4 der Konfigurationsdatentabelle T1 gemacht wird, muss ein entsprechender zweiter Eintrag in der Spalte P2 der zweiten Konfigurationsdatentabelle T2 gemacht werden. Der Editor schaltet zwischen dem Editieren eines Feldes für den ersten Eintrag zu einem Feld des zweiten Eintrags oder umgekehrt, indem das erste oder zweite Feld, insbesondere mittels Doppelklickens mit der Maus, aktiviert wird. Anschließend werden die Konfigurationsdaten in das angewählte Telekommunikationssystem heruntergeladen.

Es ist auch möglich, dass der Editor die miteinander verknüpften Konfigurationsdaten aus den Konfigurationsdatentabellen T1 und T2 synoptisch anzeigt oder dass die Konfigurationsdaten, die in der Konfigurationsdatentabelle T1 geändert wurden, nach den Vorgaben der Kontrolltabelle CT automatisch in die entsprechenden Einträge der Konfigurationsdatentabelle T2 übernommen werden.

Die Konfigurationsdatentabelle T1, T2 und die Kontrolltabelle CT können mit dem gleichen Editor erstellt werden und sind vorzugsweise ASCII-Tabellen.

Die Erfindung betrifft auch das Computer- und Softwaremodul, das in der Lage ist, die oben beschriebenen Verfahrensschritte durchzuführen.

## Patentansprüche

1. Verfahren zum Editieren von Konfigurationsdaten eines Telekommunikationssytems, mit folgenden Schritten:
Hinaufladen von zu editierenden Konfigurationsdaten aus dem Telekommunikationssystem, die in mehreren Konfigurationsdatentabellen (T1, T2) organisiert sind; Hinaufladen bzw. Erstellen mindestens einer separaten Kontrolltabelle (CT), in der wechselseitige Abhängigkeiten zwischen Spalten der mehreren Konfigurationsdatentabellen (T1, T2) definiert sind;
Editieren einer an die Konfigurationsdaten adressierten Eingabe in allen über die mindestens eine Kontrolltabelle (CT) miteinander verknüpften Spalten der mehreren Konfigurationsdatentabellen (T1, T2); und
Herunterladen der Konfigurationsdaten in das Telekommunikationssystem.

2. Verfahren nach Anspruch 1, **dadurch gekennzeichnet, dass** die mindestens eine Kontrolltabelle (CT) über einen Editor erstellt wird.

3. Verfahren nach Anspruch 1, **dadurch gekennzeichnet, dass** die.mindestens eine Kontrolltabelle (CT) vom Telekommunikationssystem hinaufgeladen wird.

4. Verfahren nach Anspruch 1, **dadurch gekennzeichnet, dass** die mindestens eine Kontrolltabelle (CT) automatisch durch das Telekommunikationssystem selbst erstellt wird.

5. Verfahren nach einem der vorhergehenden Ansprüche, **dadurch gekennzeichnet, dass** eine Editierung in einer Spalte automatisch in allen mit ihr über die mindestens eine Kontrolltabelle (CT) verknüpften anderen Spalten übernommen wird.

6. Verfahren nach einem der vorhergehenden Ansprüche, **dadurch gekennzeichnet, dass** die Konfigurationsdatentabellen (T1, T2) und/oder die Kontrolltabelle (CT) ASCII-Tabellen sind.

7. Computerprodukt mit Computerprogramm-Codemitteln, die geeignet sind, alle Schritte des Verfahrens nach einem der Ansprüche 1 bis 6 durchzuführen.

8. Computerprodukt nach Anspruch 7, **dadurch gekennzeichnet, dass** das Computerprodukt ein Computerprogramm ist.

9. Computerprodukt nach Anspruch 7, **dadurch gekennzeichnet, dass** das Computerprodukt ein computerlesbares Speichermedium ist.

10. Server zum Editieren von Konfigurationsdaten, **dadurch gekennzeichnet, dass** der Server Mittel zum Durchführen aller Schritte des Verfahrens nach einem der Ansprüche 1 bis 6 aufweist.

## Claims

1. Method for the editing of configuration data of a telecommunication system with the following stages:
Uploading of configuration data to be edited from the telecommunication system which are organised in several configuration data tables (T1, T2);
uploading or creation of at least one separate control table (CT), in which mutual dependencies between columns of the several configuration data tables (T1, T2) are defined;
editing of an Input addressed to the configuration data in all columns of the several configuration data tables (T1, T2) which are linked with each other via the at least one control table (CT); and
downloading of the configuration data into the telecommunication system.

2. Method according to Claim 1, **characterised in that** the at least one control table (CT) is prepared using an editor.

3. Method according to Claim 1, **characterised in that** the at least one control table (CT) is uploaded from the telecommunication system.

4. Method according to Claim 1, **characterised in that** the at least one control table (CT) is automatically generated by the telecommunication system itself.

5. Method according to one of the above claims, **characterised in that** an edit in one column is automatically taken over in all other columns linked with it via the at least one control table (CT).

6. Method according to one of the above claims, **characterised in that** the configuration data tables (T1, T2) and/or the control table (CT) are ASCII tables.

7. Computer product with computer program codes suitable for running all the steps in the method according to one of the claims 1 to 6.

8. Computer product according to Claim 7, **characterised in that** the computer product is a computer program.

9. Computer product according to Claim 7, **characterised in that** the computer product is a computer-readable storage medium.

10. Server for editing configuration data, **characterised in that** the server has means to run all the steps in the method according to one of the claims 1 to 6.

## Revendications

1. Procédé permettant l'édition des données de configuration d'un système de télécommunication, comportant les étapes suivantes : téléchargement des données de configuration à éditer depuis le système de télécommunication qui sont organisées dans de multiples tables de données de configuration (T1, T2) ;
téléchargement ou établissement au moins d'une table de contrôle indépendante (CT), dans laquelle des dépendances mutuelles sont définies entre les colonnes des multiples tables de données de configuration (T1, T2) ;
édition d'une entrée adressée aux données de configuration dans toutes les colonnes des multiples tables de données de configuration (T1, T2) reliées les unes aux autres par l'intermédiaire de la au moins une table de contrôle (CT) ; et
téléchargement des données de configuration dans le système de télécommunication.

2. Procédé selon la revendication 1, **caractérisé en ce que** la au moins une table de contrôle (CT) est établie par l'intermédiaire d'un éditeur.

3. Procédé selon la revendication 1, **caractérisé en ce que** la au moins une table de contrôle (CT) est téléchargée par le système de télécommunication.

4. Procédé selon la revendication 1, **caractérisé en ce que** la au moins une table de contrôle (CT) est automatiquement établie par le système de télécommunication lui-même.

5. Procédé selon l'une quelconque des revendications précédentes, **caractérisé en ce qu'**une édition dans une colonne est entreprise automatiquement dans toutes les autres colonnes reliées à elle par l'intermédiaire de la au moins une table de contrôle (CT).

6. Procédé selon l'une quelconque des revendications précédentes, **caractérisé en ce que** les tables de données de configuration (T1, T2) et/ou la table de contrôle (CT) sont des tables ASCII.

7. Produit informatique doté de moyens de codage de programme informatique qui sont appropriés pour mettre en oeuvre toutes les étapes du procédé selon l'une quelconque des revendications 1 à 6.

8. Produit informatique selon la revendication 7, **caractérisé en ce que** le produit informatique est un programme informatique.

9. Produit informatique selon la revendication 7, **caractérisé en ce que** le produit informatique est un support de données lisible par ordinateur.

10. Serveur permettant l'édition de données de configuration, **caractérisé en ce qu'**il présente des moyens permettant la mise en oeuvre de toutes les étapes du procédé selon l'une quelconque des revendications 1 à 6.
